# EUROPEAN PATENT SPECIFICATION

(11) **EP 3 992 841 B1**
(45) Date of publication and mention of the grant of the patent: **17.09.2025**
(21) Application number: 20204810.4
(22) Date of filing: 30.10.2020
(51) Int. Cl.: G06V 20/56

(54) **AUTOMATIC VISUAL PERCEPTION**
AUTOMATISCHE VISUELLE WAHRNEHMUNG
PERCEPTION VISUELLE AUTOMATIQUE

(43) Date of publication of application: 04.05.2022
(73) Proprietor: Valeo Schalter und Sensoren GmbH, 74321 Bietigheim-Bissingen (DE)
(72) Inventor: SOBH, Ibrahim, Giza, Cairo (EG)
(74) Representative: Hofstetter, Schurack & Partner

(56) References cited:
- PETRA BEVANDI\'C ET AL: "Discriminative out-of-distribution detection for semantic segmentation", ARXIV.ORG, CORNELL UNIVERSITY LIBRARY, 201 OLIN LIBRARY CORNELL UNIVERSITY ITHACA, NY 14853, 23 August 2018 (2018-08-23), XP081101301
- KIMIN LEE ET AL: "Training Confidence-calibrated Classifiers for Detecting Out-of-Distribution Samples", ARXIV.ORG, CORNELL UNIVERSITY LIBRARY, 201 OLIN LIBRARY CORNELL UNIVERSITY ITHACA, NY 14853, 26 November 2017 (2017-11-26), XP081319903
- AMODEI DARIO ET AL: "Concrete Problems in AI Safety", ARXIV.ORG, 25 July 2016 (2016-07-25), pages 1 - 29, XP055778468, Retrieved from the Internet <URL:https://arxiv.org/pdf/1606.06565.pdf> [retrieved on 20210222]

## Description

The present invention is directed to a method for guiding a motor vehicle at least in part automatically, to an electronic vehicle guidance system for a motor vehicle, to computer program and to a computer-readable storage medium.

Visual perception algorithms, also denoted as computer vision algorithms, for example object detection algorithms, image classification algorithms or segmentation algorithms, may be used in automotive applications, for example for autonomous driving or driver assistance functions. Typical visual perception algorithms use artificial neural networks, for example convolutional neural networks, CNNs, for carrying out the corresponding visual perception task. This requires an appropriate training of the visual perception algorithm and the underlying neural network. To do so, large sets of training images are used.

One general problem that may occur when training artificial neural networks is overfitting. This mean that the performance of the visual perception algorithm may be high for images being rather similar to the training images, but low for different types of images. In general, this phenomenon also occurs for well-trained neural networks, albeit to a lesser extent. In particular, a set of training images represents an underlying distribution of input data. For example, typical colors, gray scales, brightness or specific features in the image, such as lightening conditions, road types, object types, et cetera, define the distribution of the training set. Once the neural network has been trained, its performance is typically high for images matching the distribution of the training images, or, in other words, which show a high conformance with the distribution of the training images. In case images do not match the distribution of the training images well, the performance of the visual perception algorithm is reduced, which results in a low reliability of the results of the visual perception task. While this is disadvantageous in general, such low reliability may lead to severe safety issues, in particular for automotive applications.

Typically, in order to generalize the visual perception algorithm for different input conditions, for example different weather or lighting conditions, data augmentation techniques may be applied. To this end, the training images may be augmented by applying different effects, such as brightness or contrast changes, random noise or geometric transformations. In this way, the trained neural network is able to perform well for a greater variety of input data. However, this does not change the general problem that input images that do not match the underlying distribution according to the training, the performance of the neural network is reduced.

It is therefore an object of the present invention to provide an improved concept for automatic visual perception, which allows for an increased level of safety for applications using results of the visual perception.

This object is achieved by the respective subject-matter of the independent claims. Further implementations and preferred embodiments are subject-matter of the dependent claims.

The improved concept is based on the idea to determine a measure that allows to quantify, whether the respective input data are in conformance with the distribution of the training images used for training the visual perception algorithm.

According to the improved concept, a method for guiding a motor vehicle at least in part automatically is provided. Therein, input data representing an environment of the motor vehicle is generated by an environmental sensor system of the motor vehicle and provided to a computing unit of the motor vehicle. A computer implemented method for training an algorithm for automatic visual perception, which comprises an artificial neural network and a generative adversarial network, is carried out, wherein the artificial neural network is trained to carry out a visual perception task based on a set of training data and the generative adversarial network is trained based on the set of training data. The trained artificial neural network is applied to the input data to automatically carry out the visual perception task. A conformance value is determined, for example by the computing unit, by applying a discriminator of the trained generative adversarial network, GAN, to the input data, wherein the conformance value quantifies a conformance with the input data with the set of training data, wherein the conformance value is a measure how well the input data matches a data distribution given by the set of training data. Depending on the conformance value, an output, depending on a result of the visual perception task is generated, for example by the computing unit. The steps of applying the trained artificial network to the input data, determining the conformance value and generating the output are carried out by the computing unit. The motor vehicle is guided at least in part automatically depending on the output generated by the computing unit, wherein the result of the visual perception task is considered or discarded for guiding the motor vehicle at least in part automatically depending on the conformance value.

Guiding a vehicle at least in part automatically may comprise guiding the vehicle according to a fully automatic or fully autonomous driving mode according to level 5 of the SAE J3016 classification. Guiding a vehicle at least in part automatically may also comprise guiding the vehicle according to a partly automatic or partly autonomous driving mode according to levels 1 to 4 of the SAE J3016 classification. In other words, the vehicle may carry out all required functions, such as steering maneuvers, deceleration maneuvers and/or acceleration maneuvers as well as monitoring and recording the road traffic and corresponding reactions automatically. Alternatively, an advanced driver assistance system, ADAS, assisting a driver for partially automatic or partially autonomous driving may be implemented. Here and in the following, SAE J3016 refers to the respective standard dated June 2018. PETRA BEVANDI\'C ET AL: "Discriminative out-of-distribution detection for semantic segmentation",ARXIV.ORG, CORNELL UNIVERSITY LIBRARY, 201 OLIN LIBRARY CORNELL UNIVERSITY ITHACA, NY 14853, 23 August 2018, discloses an approach which detects out-of-distribution samples by a dedicated "OOD" model being completely separate from the "primary" model trained for a specific vision task. KIMIN LEE ET AL: "Training Confidence-calibrated Classifiers for Detecting Out-of- Distribution Samples",ARXIV.ORG, CORNELL UNIVERSITY LIBRARY, 201 OLIN LIBRARY CORNELL UNIVERSITY ITHACA, NY 14853, 26 November 2017, discloses a method that jointly trains both classification and generative neural networks for out-of-distribution samples. Amodei Dario ET AL: "Concrete Problems in Al Safety",arXiv.org, 25 July 2016 (2016-07-25), pages 1-29, discloses a list of five practical research problems related to accident risk, categorized according to whether the problem originates from having the wrong objective function ('avoiding side effects' and "avoiding reward hacking'), an objective function that is too expensive to evaluate frequently ( 'scalable supervision' ), or undesirable behavior during the learning process ( 'safe exploration' and 'distributional shift' ).

By making use of a computer implemented method for automatic visual perception according to the improved concept, the method for guiding a motor vehicle at least in part automatically according to the improved concept benefits from the advantages explained above. In particular, since the output is generated depending on the conformance value or may contain the conformance value or information depending thereupon, the computing unit or the control unit may assess the reliability of the result of the visual perception task. Consequently, the computing unit or the control unit may decide to take into account the visual perception task results or not for guiding the motor vehicle at least in part automatically. In this way, wrong or unfavorable conclusions or decisions due to incorrect results of the visual perception task may be avoided which improves safety for guiding the vehicle at least in part automatically.

Here and in the following, an image may be understood as a two-dimensional representation of an environment. In particular, an image may correspond to a camera image or to a lidar image, also denoted as lidar point cloud, or a radar image.

The visual perception task may for example comprise an object detection task, a classification task and/or a semantic segmentation task, et cetera. The object detection task may for example comprise identifying one or more objects within a provided input image by specifying respective bounding boxes and assigning corresponding object classes to each of the bounding boxes, wherein the object classes may be selected from a predefined set of object classes. A classification task may for example comprise assigning an image class to a provided input image, wherein the image class may be selected from a predefined set of image classes. A semantic segmentation task may for example include assigning a semantic label or a semantic descriptor to each pixel or point of the provided input image.

The artificial neural network, which may, in order to distinguish it from the GAN, also be denoted as perception network in the following, has been trained, in particular, prior to the computer implemented method for automatic visual perception. For training the perception network, training images comprised by the training data may be used. Apart from the training images, the training data may also comprise corresponding labels for each of the training images. The perception network may for example be trained using the training images and the corresponding labels for carrying out a supervised training.

The GAN may be trained in an unsupervised manner. In order to enable the discriminator, which may also be denoted as discriminator network, to determine the conformance value such that it quantifies a conformance of the input data with the set of training data, the GAN is trained based on the same set of training data used for training the perception network, in particular based on the same training images.

The GAN comprises the discriminator and a generator or a generator network. The discriminator and the generator may also comprise one or more respective further artificial neural networks. The generator is designed to generate new data instances, while the discriminator is designed to decide whether the data instances are "real" or "fake". Therein, "real" and "fake" may be understood such that the data instances are in conformance or not with a given data distribution. Therein, the data distribution is learned by the GAN during the training. In other words, during the training of the GAN, the generator learns to generate data instances, for example images, according to a distribution defined by the set of training images used for the training. The discriminator is trained to decide whether the instances generated by the generator match the distribution or not or, in particular, to determine a quantitative measure how well the instance matches the distribution. The quantitative measure may lie between a minimum and a maximum value, which may for example be normalized to the range from 0 to 1. In the following, without restricting generality, it is assumed that the conformance value is a value within the range [0, 1], wherein 1 corresponds to the best match and 0 corresponds to the worst match.

Once the GAN has been trained, the generator is not required anymore for carrying out a method according to the improved concept, but only the discriminator is used. In other words, the trained discriminator may be considered as a binary classifier, whose output ranges from zero to one or lies within another predefined range, wherein the output indicates how an arbitrary input matches the training data, in particular the training images, and its underlying data distribution used for training the GAN as well as for training the perception network.

In this way, the conformance value does not only represent a measure how well the input data match the training images, but also the reliability of the output of the visual perception task. In case the input data matches the training images well, the performance of the perception network is expected to be high and the reliability of the output of the visual perception task can be considered to be high as well. On the other hand, if the conformance value is low and the input data do not match the training images well, the performance of the visual perception task and the reliability of its output may be low.

Thus, the method according to the improved concept provides important information for any applications using the output of the visual perception task for guiding the motor vehicle automatically or in part automatically, that allows to quantify the reliability of the output of the visual perception task. In this way the performance of the application and, in particular, safety of the application, may be improved.

The content of the result of the visual perception task depends on the actual visual perception task. In case of an object detection task, the result of the visual perception task comprises one or more bounding boxes or descriptions defining bounding boxes for objects identified in the input data and a corresponding object class for each of the bounding boxes. In case of a classification task, the result of the visual perception task may comprise an image class for the image data. In case of a semantic segmentation task, the result of the visual perception task may comprise a corresponding semantic label or pixel class for each point or pixel of the input data.

The content of the output depends on the conformance value. For example, the output may comprise the result of the visual perception task or may comprise content, which is generated based on the result of the visual perception task, for example by the computing unit. Alternatively or in addition, the output may also comprise the conformance value or further information depending on the conformance value or generated by the computing unit based on the conformance value.

For example, if the conformance value is close to 1, for example if it is equal to or greater than a threshold value, the output may comprise the result of the visual perception task. In particular, the output may comprise the result of the visual perception task only, if the conformance value is high enough. On the other hand, the output may comprise the result of the visual perception task together with an additional warning output, in case the conformance value is lower, in particular smaller than the threshold value. Further implementations may use different definitions for generating the output.

For example, if the conformance value is equal to or greater than the threshold value, the output may comprise the result of the visual perception task without an additional information or with an additional information indicating that the reliability of the result of the visual perception task is high. If the conformance value is less than the threshold value, the output may comprise information indicating that the reliability of the result of the visual perception task is reduced. Apart from the threshold value, there may be further predefined threshold values to be able to categorize the conformance value and generate the output accordingly.

In case the result the visual perception task is considered for guiding the motor vehicle at least in part automatically, the control unit may for example generate control signals for controlling one or more actuators of the motor vehicle for carrying out corresponding actions or may generate information signals, warning signals or assistance signals for the user or driver of the motor vehicle, depending on the result the visual perception task. In case the result of the visual perception task is discarded, it is not used for generating such signals, and may, in particular, be ignored. In other words, it depends on the conformance value, whether the result of the visual perception task is considered or discarded for guiding the motor vehicle at least in part automatically.

In this way, it may be assured that the result of the visual perception task is considered only if the conformance value is large enough and, correspondingly, the reliability of the result of the visual perception task is high. Consequently, safety is improved.

In particular, the set of training data comprises a set of training images, and all training images of the set of training data are used to train the perception network and are also used to train the GAN. Further training images may be used for training the perception network but not the GAN or vice versa.

By training the perception network as well as the GAN based on the same training images, it is ensured that the trained GAN learns the underlying data distribution represented by the training images. In other words, the discriminator of the GAN may then act as a binary classifier, which is able to determine whether or not an arbitrary input is in conformance with the set of training images.

According to several implementations of the method, the conformance value is compared to a predefined threshold value by the computing unit and the output is generated by the computing unit depending on a result of the comparison.

The comparison may be carried out as a direct comparison or as an indirect comparison, for example comparing a functional value of the conformance value with a functional value of the threshold value, as for a hash function. In general, every method that allows to determine whether or not the conformance value is equal to or greater than the threshold value may be considered as a comparison.

By generating the output depending on the result of the comparison, it is possible for the subsequent application of the output of the visual perception task to rely on the result of the visual perception task, only if the conformance value is high enough. In this way, a well-leveled or graduated reaction is possible while the safety is still improved.

According to several implementations, the output is generated by the computing unit to include a warning output, if the conformance value is smaller than the threshold value. The warning output may comprise a warning message or a warning signal or a trigger signal to cause an output device to output an acoustic, visual and/or haptic signal to a user or an application.

According to several implementations of the method for guiding a motor vehicle, it comprises comparing the conformance value to a predefined threshold value and generating the output depending on a result of the comparison. The result of the visual perception task is considered, in particular by the control unit, for guiding the motor vehicle at least in part automatically, only if the conformance value is equal or greater than the threshold value.

According to several implementations of the method for guiding the vehicle at least in part automatically, an acoustic warning signal and/or a visual warning signal and/or a haptic warning signal is generated, if the result of the visual perception task is discarded for generator the motor vehicle at least in part automatically.

In particular, the acoustic, visual and/or haptic warning signal may be output to the user or driver of the motor vehicle by means of an output device of the motor vehicle, for example including a loudspeaker, a display or optical signaling device or a haptic actuator. For example, the acoustic, visual and/or haptic warning signal may be generated by the computing unit, if the conformance value is smaller than the threshold value.

In this way, it is ensured that the driver or user is actually aware of the fact that the result of the visual perception task is not and, consequently, the functionality of the motor vehicle or the respective assistance function may be restricted. In this way, the safety may be further improved.

According to several implementations of the method, a generator of the GAN is trained based on the set of training data, in particular the training images, to generate data in conformance with the set of training data, in particular the training images. A discriminator of the GAN is trained based on the set of training data to determine a conformance value for given input data, wherein the conformance value quantifies a conformance of the given input data with the set of training data.

According to several implementations, the GAN is trained based on the set of training data, in particular the training images, in an unsupervised manner. In other words, the labels comprised by the set of training data are not used for training the GAN.

Therefore, the required amount of labeled training images for training an algorithm for automatic visual perception according to the improved concept is not necessarily larger than required for training only the perception network itself.

According to several implementations of the method, the artificial neural network, in particular the perception network, is trained based on the set of training data, in particular the training images and the label of the training images, in a supervised manner.

According to the improved concept, also an electronic vehicle guidance system for a motor vehicle is provided. The electronic vehicle guidance system comprises a storage element storing an artificial neural network, in particular denoted as perception network, which has been trained based on a set of training data. The electronic vehicle guidance system comprises an environmental sensor system, which is configured to generate input data representing an environment of the electronic vehicle guidance system, in particular of the motor vehicle. The electronic vehicle guidance system comprises a computing unit, which is configured to apply the artificial neural network to the input data to automatically carry out a visual perception task. The storage element further stores at least a part of a GAN, in particular at least a discriminator of the trained GAN, which has been trained based on the set of training data. The computing unit is configured to determine a conformance value by applying the discriminator of the GAN to the input data, wherein the conformance value quantifies a conformance of the input data with the set of training data and the conformance value is a measure how well the input data (8) matches a data distribution given by the set of training data. The computing unit is further configured to generate an output depending on the conformance value and depending on a result of the visual perception task. The electronic vehicle guidance system further comprises a control unit, which is configured to guide the motor vehicle at least in part automatically depending on the output, wherein the result of the visual perception task is considered or discarded for guiding the motor vehicle at least in part automatically depending on the conformance value.

In particular, the control unit is configured to generate one or more control signals for guiding the motor vehicle at least in part automatically depending on the output and provide the one or more control signals to one or more actuators for guiding the vehicle. The control unit may be a part of the computing unit or may be implemented separately to the computing unit.

An electronic vehicle guidance system may be understood as an electronic system, configured to guide the vehicle in a fully automatic or fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification.

Providing the set of training data may for example be understood such that the training data, in particular the training images, are stored in a computer-readable manner on the storage element.

According to several implementations, of the electronic vehicle guidance system, the environmental sensor system comprises a camera system, a lidar system or a radar system.

Further implementations of the electronic vehicle guidance system according to the improved concept follow directly from the various implementations of the method for guiding a motor vehicle at least in part automatically according to the improved concept and vice versa, respectively. In particular, an electronic vehicle guidance system according to the improved concept may be programmed to or configured to carry out a method for guiding a motor vehicle at least in part automatically according to the improved concept or the electronic vehicle guidance system carries out such a method.

According to the improved concept, also a motor vehicle comprising an electronic vehicle guidance system according to the improved concept is provided.

According to the improved concept, a computer program comprising instructions is provided. When the instructions or the computer program, respectively, are executed by an electronic vehicle guidance system according to the improved concept, in particular by the computing unit of the electronic vehicle guidance system, the instructions cause the electronic vehicle guidance system to carry out a method for guiding a motor vehicle at least in part automatically.

According to the improved concept, also a computer-readable storage medium storing a computer program according to the improved concept is provided.

Further features of the invention are apparent from the claims, the figures and the description of figures. The features and feature combinations mentioned above in the description as well as the features and feature combinations mentioned below in the description of figures and/or shown in the figures alone may not only be encompassed by the improved concept in the respectively specified combination, but also in other combinations. Thus, implementations of the improved concept are encompassed and disclosed, which may not explicitly be shown in the figures or explained, but arise from and can be generated by separated feature combinations from the explained implementations. Implementations and feature combinations, which do not have all features of an originally formulated claim, may be encompassed by the improved concept.

In the figures:
- Fig. 1: shows schematically a vehicle with an exemplary implementation of an electronic vehicle guidance system according to the improved concept;
- Fig. 2: shows a flow diagram of a computer implemented method for training an algorithm for automatic visual perception; and
- Fig. 3: shows a flow diagram of an exemplary implementation of a method for guiding a motor vehicle at least in part automatically according to the improved concept.

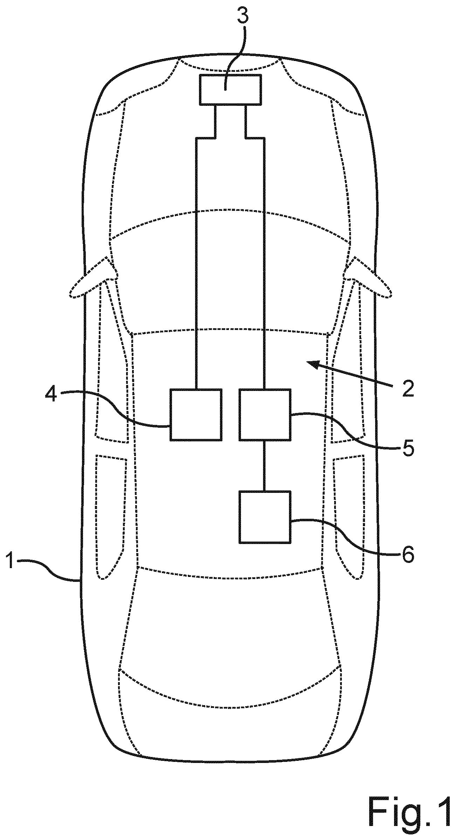

Fig. 1 shows schematically a motor vehicle 1 comprising an exemplary implementation of an electronic vehicle guidance system 2 according to the improved concept.

The electronic vehicle guidance system 2 comprises an environmental sensor system 3, which may for example be implemented as a camera or a lidar system. The environmental sensor system 3 is configured to depict an environment of the motor vehicle 1, which may comprise one or more objects. In case of a lidar system, the images generated by the environmental sensor system 3 correspond to respective point clouds, while in the case of a camera system, camera images are generated.

The vehicle guidance system 2 further comprises a computing unit 5, which is connected to a storage element 6, as well as to a control unit 4. In alternative implementations, the control unit 4 may be a part of the computing unit 5.

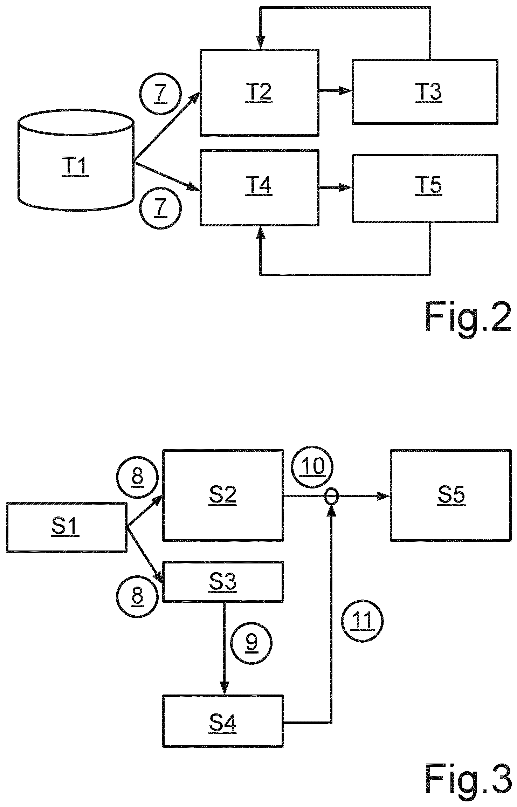

The storage element 6 stores a trained perception network which is designed as an artificial neural network and has been trained based on a set of training data 7 (see Fig. 2), in particular according to the improved concept. Furthermore, the storage element 6 stores a discriminator of a generative adversarial network, GAN, wherein the GAN also has been trained based on the same set of training data 7, in particular according to the improved concept. The perception network and the discriminator of the GAN may be considered as a part of an algorithm for automatic visual perception.

The algorithm for automatic visual perception may be executed by the computing unit 5 to carry out a respective visual perception task, such as object detection, for example for identifying respective bounding boxes for the objects in the environment of the motor vehicle 1 and corresponding object classes.

The training of the algorithm for visual perception and the function of the electronic vehicle guidance system 2 are explained in more detail with respect to exemplary implementations of a computer implemented method for training an algorithm for automatic visual perception, in particular referring to Fig. 2, and to exemplary implementations of methods for guiding a motor vehicle according to the improved concept, in particular with reference to Fig. 3.

The steps T1 to T5 shown in Fig. 2 represent an exemplary implementation of a computer implemented method for training the visual perception algorithm.

In step T1, a set of training data 7 comprising a set of training images and respective labels for each of the training images is provided, in particular in a computer-readable manner. In steps T2 and T3, the perception network is trained in a supervised manner based on the set of training data 7. To this end, the respective training images of the training data 7 are provided as an input to the perception network in step T2. The perception network generates corresponding predictions as an output, for example bounding boxes and object classes in case of an object detection algorithm. In step T3, a loss function may be computed depending on the output of the perception network and the corresponding labels of the training data 7, the loss function quantifying a deviation or an error of the output of the perception network with respect to the labels of the training data 7. Depending on a result of the loss function, steps T2 and T3 may be repeated until predefined stopping criteria are fulfilled.

In steps T4 and T5, the GAN is trained in an unsupervised manner based on the same training data, in particular based on the training images of the training data 7. To this end, the generator of the GAN generates image data depending on the set of training images of the set of training data 7. The discriminator of the GAN determines, whether the generated input image of the generator matches the distribution of the training images of the training data 7 and outputs a value between 0 and 1, wherein 0 means worst matching and 1 means best matching.

The steps T2 to T5 may for example be carried out by means of a training computer system (not shown in the figures), external to the electronic vehicle guidance system 2 and the motor vehicle 1.

Steps S1 to S5 of Fig. 3 represent an exemplary implementation of a method for automatic visual perception.

In step S1, the discriminator of the trained GAN, in particular trained according to the method described with respect to Fig. 2, is provided and stored to the storage element 6. Furthermore, an input image 8 is generated by the environmental sensor system 3 of the vehicle 1, for example as a camera image, a lidar point cloud or a radar image. Furthermore, the trained perception network, for example trained as described with respect to Fig. 2, is also provided to the storage element 6. In step S2, the trained perception network is applied to the input image 8 to generate a respective visual perception result 10, for example comprising one or more bounding boxes and respective object classes in case of an object detection algorithm. In step S3, the discriminator of the trained GAN is applied to the input image 8 and determines a conformance value 9 between 0 and 1 indicating the conformance of the input image 8 with the data distribution of the training images of the training data 7 used for training the perception network as well as the GAN, as described with respect to Fig. 2.

In step S4, the computing unit 5 may compare the conformance value to one or more predefined threshold values to identify, in which range of two or more ranges from 0 to 1 the conformance value 9 lies. In one implementation, only one threshold value is predefined. If the conformance value is greater than the threshold value, the input image 8 may be considered to match the data distribution of the training images, and consequently, the visual perception result 10 may be considered as safe or reliable. On the other hand, if the conformance value 9 is less than the threshold, the input image 8 may be considered not to match the distribution of the training images and, consequently, the reliability or safety of the visual perception result 10 may be considered low or reduced. In the latter case, the computing unit 5 may, for example, generate a warning output 11.

In step S5, the computing unit 5 may generate an output depending on the conformance value 9 and the visual perception result 10 and optionally depending on the warning output 11. For example, if the conformance value 9 is greater than the threshold value, the output generated in step S5 may comprise the visual perception result 10 and, optionally, information indicating a sufficient reliability of the visual perception result 10. In case the conformance value 9 is less than the threshold value, the output generated in step S5 may, for example, comprise the warning output 11, which may correspond to a trigger signal for generating and outputting an acoustic, visual or haptic warning signal to a user of the vehicle 1 by means of a respective output unit of the vehicle 1 or the vehicle guidance system 2. In this way, the user may be informed that the reliability of the visual perception result 10 is reduced and/or that the visual perception result 10 is not being used by the electronic vehicle guidance system 2 for guiding the vehicle 1 at least in part automatically.

Furthermore, the control unit 4 may generate one or more control signals in step S5 depending on the visual perception result 10 in order to guide the vehicle 1 at least in part automatically.

It is emphasized that the actual routine how to deal with the visual perception result 10, the conformance value 9 and/or the warning output 11 depends on the actual implementation of the method or the electronic vehicle guidance system 2, respectively. In particular, more than one threshold may be defined for the conformance value 9. In this way, a more graduated reaction of the control unit may be enabled. For example, for particularly low values of the conformance value 9, the automatic or partly automatic guiding of the vehicle 1 by the vehicle guidance system 2 may be disabled due to the impaired safety. For particularly high values of the conformance value 9, however, the electronic vehicle guidance system 2 may control the vehicle 1 in a normal mode as intended depending on the visual perception result 10. In case of intermediate values for the conformance value 9, the automatic or partly automated guiding may be still carried out or may carried out in a restricted manner, for example accompanied by a respective warning or information for the user or driver of the vehicle 1.

As described, in particular with respect to the figures, the improved concept provides effective means to improve the safety for guiding a motor vehicle at least in part automatically based on the result of a visual perception task.

To this end, a measure is implemented indicating how far the input is from the actual training data in order to face the general problem of limited generalization during training of neural networks. In this way, uncertainties may be assessed, even in case data generalization techniques such as data augmentation are not sufficient. Since a trained neural network for visual perception tasks gives its predictions once it is fed with an input, whether or not the input is similar to the training data, safety, for example, for autonomous or automatic driving applications, is improved for cases, where the input is not similar to the training data and therefore the prediction is not reliable. The deviation of the input from the training data may for example origin from environmental influences, such as weather changes, or sensor internal influences, such as contaminations or other malfunctions.

According to the various implementations, the discriminator of a trained GAN is used as binary classifier. In case the discriminator outputs that the reliability of the prediction by the perception network is low, said output may be considered uncertain or risky and, for example, be neglected. Moreover, the user may be notified accordingly.

## Claims

1. Method for guiding a motor vehicle (1) at least in part automatically, wherein
- input data (8) representing an environment of the motor vehicle (1) is generated by an environmental sensor system (3) of the motor vehicle (1) and provided to a computing unit (5) of the motor vehicle (1);
- a computer implemented method for training an algorithm for automatic visual perception, which comprises an artificial neural network and a generative adversarial network, is carried out, wherein the artificial neural network is trained to carry out a visual perception task based on a set of training data (7) and the generative adversarial network is trained based on the set of training data (7);
- the trained artificial neural network is applied to the input data (8) to automatically carry out the visual perception task;
- a conformance value (9) is determined by applying a discriminator of the trained generative adversarial network to the input data (8), wherein the conformance value (9) quantifies a conformance of the input data (8) with the set of training data (7), wherein the conformance value is a measure how well the input data (8) matches a data distribution given by the set of training data (7);
- depending on the conformance value (9), an output depending on a result (10) of the visual perception task is generated;
- the steps of applying the trained artificial network to the input data (8), determining the conformance value (9) and generating the output are carried out by the computing unit (5); and
- the motor vehicle (1) is guided at least in part automatically depending on the output generated by the computing unit (5), wherein the result (10) of the visual perception task is considered or discarded for guiding the motor vehicle (1) at least in part automatically depending on the conformance value (9).

2. Method according to claim 1,
**characterized in that**
- the conformance value (9) is compared to a predefined threshold value; and
- the output is generated depending on a result of the comparison.

3. Method according to claim 2,
**characterized in that**
the output is generated to include a warning output (11), if the conformance value (9) is smaller than the threshold value.

4. Method according to one of the preceding claims, wherein
- the generative adversarial network is trained based on the set of training data (7) in an unsupervised manner; and/or
- the artificial neural network is trained based on the set of training data (7) in a supervised manner.

5. Method according to one of the claims 2 or 3,
**characterized in that**
- the result (10) of the visual perception task is considered for guiding the motor vehicle (1) at least in part automatically, only if the conformance value (9) is equal to or greater than the threshold value.

6. Method according to one of claims 2, 3 or 5,
**characterized in that**
an acoustic warning signal and/or a visual warning signal and/or a haptic warning signal is generated, if the result (10) of the visual perception task is discarded for guiding the motor vehicle (1) at least in part automatically.

7. Electronic vehicle guidance system (2) for a motor vehicle (1), comprising
- a storage element (6) storing an artificial neural network, which has been trained based on a set of training data (7);
- an environmental sensor system (3), which is configured to generate input data (8) representing an environment of the electronic vehicle guidance system (2); and
- a computing unit (5), which is configured to apply the artificial neural network to the input data (8) to automatically carry out a visual perception task,
**characterized in that**
- the storage element (6) stores at least a part of a trained generative adversarial network, which has been trained based on the set of training data (7);
- the computing unit (5) is configured to
- determine a conformance value (9) by applying a discriminator of the generative adversarial network to the input data (8), wherein the conformance value (9) quantifies a conformance of the input data (8) with the set of training data (7) and the conformance value is a measure how well the input data (8) matches a data distribution given by the set of training data (7); and
- generate an output depending on the conformance value (9) and depending on a result (10) of the visual perception task; and
- the electronic vehicle guidance system (2) comprises a control unit (4), which is configured to guide the motor vehicle (1) at least in part automatically depending on the output, wherein the result (10) of the visual perception task is considered or discarded for guiding the motor vehicle (1) at least in part automatically depending on the conformance value (9).

8. Electronic vehicle guidance system (2) according to claim 7, wherein the environmental sensor system (3) comprises a camera, a lidar system or a radar system.

9. Computer program comprising instructions, wherein, when executed by an electronic vehicle guidance system (2) according to one on claims 7 or 8, the instructions cause the electronic vehicle guidance system (2) to carry out a method according to one of claims 1 to 6.

10. Computer readable storage medium storing a computer program according to claim 9.

## Patentansprüche

1. Verfahren zum zumindest teilweise automatischen Führen eines Kraftfahrzeugs (1), wobei
- Eingangsdaten (8), die eine Umgebung des Kraftfahrzeugs (1) repräsentieren, von einem Umfeldsensorsystem (3) des Kraftfahrzeugs (1) erzeugt und einer Recheneinheit (5) des Kraftfahrzeugs (1) bereitgestellt werden;
- ein computerimplementiertes Verfahren zum Trainieren eines Algorithmus zur automatischen visuellen Wahrnehmung, der ein künstliches neuronales Netzwerk und ein generatives adversarisches Netzwerk umfasst, durchgeführt wird, wobei das künstliche neuronale Netzwerk trainiert wird, eine visuelle Wahrnehmungsaufgabe basierend auf einem Satz von Trainingsdaten (7) durchzuführen, und das generative adversarische Netzwerk basierend auf dem Satz von Trainingsdaten (7) trainiert wird;
- das trainierte künstliche neuronale Netzwerk auf die Eingangsdaten (8) angewendet wird, um die visuelle Wahrnehmungsaufgabe automatisch durchzuführen;
- ein Konformitätswert (9) durch Anwenden eines Diskriminators des trainierten generativen adversarischen Netzwerks auf die Eingangsdaten (8) bestimmt wird, wobei der Konformitätswert (9) eine Konformität der Eingangsdaten (8) mit dem Satz von Trainingsdaten (7) quantifiziert, wobei der Konformitätswert ein Maß dafür ist, wie gut die Eingangsdaten (8) einer Datenverteilung entsprechen, die durch den Satz von Trainingsdaten (7) gegeben ist;
- abhängig von dem Konformitätswert (9) eine Ausgabe erzeugt wird, die von einem Ergebnis (10) der visuellen Wahrnehmungsaufgabe abhängt;
- die Schritte der Anwendung des trainierten künstlichen Netzwerks auf die Eingangsdaten (8), der Bestimmung des Konformitätswerts (9) und der Erzeugung der Ausgabe durch die Recheneinheit (5) durchgeführt werden; und
- das Kraftfahrzeug (1) abhängig von der von der Recheneinheit (5) erzeugten Ausgabe zumindest teilweise automatisch geführt wird, wobei das Ergebnis (10) der visuellen Wahrnehmungsaufgabe abhängig von dem Konformitätswert (9) berücksichtigt oder verworfen wird, um das Kraftfahrzeug (1) zumindest teilweise automatisch zu führen.

2. Verfahren nach Anspruch 1,
**gekennzeichnet dadurch,**
- **dass** der Konformitätswert (9) mit einem vordefinierten Schwellenwert verglichen wird; und
- **dass** die Ausgabe abhängig von einem Ergebnis des Vergleichs erzeugt wird.

3. Verfahren nach Anspruch 2,
**gekennzeichnet dadurch,**
**dass** die Ausgabe erzeugt wird, um eine Warnausgabe (11) zu beinhalten, wenn der Konformitätswert (9) kleiner als der Schwellenwert ist.

4. Verfahren nach einem der vorhergehenden Ansprüche,
wobei
- das generative adversarische Netzwerk basierend auf dem Satz von Trainingsdaten (7) unüberwacht trainiert wird; und/oder
- das künstliche neuronale Netzwerk basierend auf dem Satz von Trainingsdaten (7) überwacht trainiert wird.

5. Verfahren nach einem der Ansprüche 2 oder 3,
**gekennzeichnet dadurch,**
**dass** das Ergebnis (10) der visuellen Wahrnehmungsaufgabe nur dann zur zumindest teilweisen automatischen Führung des Kraftfahrzeugs (1) berücksichtigt wird, wenn der Konformitätswert (9) gleich oder größer als der Schwellenwert ist.

6. Verfahren nach einem der Ansprüche 2, 3 oder 5,
**gekennzeichnet dadurch,**
**dass** ein akustisches Warnsignal und/oder ein visuelles Warnsignal und/oder ein haptisches Warnsignal erzeugt wird, wenn das Ergebnis (10) der visuellen Wahrnehmungsaufgabe zur zumindest teilweisen automatischen Führung des Kraftfahrzeugs (1) verworfen wird.

7. Elektronisches Fahrzeugführungssystem (2) für ein Kraftfahrzeug (1), umfassend
- ein Speicherelement (6), das ein künstliches neuronales Netzwerk speichert, das basierend auf einem Satz von Trainingsdaten (7) trainiert wurde;
- ein Umfeldsensorsystem (3), das dazu eingerichtet ist, Eingangsdaten (8) zu erzeugen, die eine Umgebung des elektronischen Fahrzeugführungssystems (2) repräsentieren; und
- eine Recheneinheit (5), die dazu eingerichtet ist, das künstliche neuronale Netzwerk auf die Eingangsdaten (8) anzuwenden, um eine visuelle Wahrnehmungsaufgabe automatisch durchzuführen,
**gekennzeichnet dadurch,**
- **dass** das Speicherelement (6) zumindest einen Teil eines trainierten generativen adversarischen Netzwerks speichert, das basierend auf dem Satz von Trainingsdaten (7) trainiert wurde;
- **dass** die Recheneinheit (5) dazu eingerichtet ist, einen Konformitätswert (9) zu bestimmen, indem ein Diskriminator des generativen adversarischen Netzwerks auf die Eingangsdaten (8) angewendet wird, wobei der Konformitätswert (9) eine Konformität der Eingangsdaten (8) mit dem Satz von Trainingsdaten (7) quantifiziert und der Konformitätswert ein Maß dafür ist, wie gut die Eingangsdaten (8) einer Datenverteilung entsprechen, die durch den Satz von Trainingsdaten (7) gegeben ist; und eine Ausgabe zu erzeugen, die von dem Konformitätswert (9) und von einem Ergebnis (10) der visuellen Wahrnehmungsaufgabe abhängt; und
- **dass** das elektronische Fahrzeugführungssystem (2) eine Steuereinheit (4) umfasst, die dazu eingerichtet ist, das Kraftfahrzeug (1) abhängig von der Ausgabe zumindest teilweise automatisch zu führen, wobei das Ergebnis (10) der visuellen Wahrnehmungsaufgabe abhängig von dem Konformitätswert (9) zumindest teilweise automatisch berücksichtigt oder verworfen wird.

8. Elektronisches Fahrzeugführungssystem (2) nach Anspruch 7,
wobei das Umfeldsensorsystem (3) eine Kamera, ein Lidarsystem oder ein Radarsystem umfasst.

9. Computerprogramm, das Anweisungen umfasst, die, wenn sie von einem elektronischen Fahrzeugführungssystem (2) nach einem der Ansprüche 7 oder 8 ausgeführt werden, das elektronische Fahrzeugführungssystem (2) dazu veranlassen, ein Verfahren nach einem der Ansprüche 1 bis 6 durchzuführen.

10. Computerlesbares Speichermedium, das ein Computerprogramm nach Anspruch 9 speichert.

## Revendications

1. Procédé de guidage d'un véhicule automobile (1) au moins en partie automatiquement, dans lequel
- des données d'entrée (8) représentant un environnement du véhicule automobile (1) sont générées par un système de capteurs (3) du véhicule automobile (1) et fournies à une unité de calcul (5) du véhicule automobile (1);
- un procédé mis en œuvre par ordinateur pour entraîner un algorithme pour la perception visuelle automatique, qui comprend un réseau neuronal artificiel et un réseau antagoniste génératif, est exécuté, dans lequel le réseau neuronal artificiel est entraîné pour effectuer une tâche de perception visuelle basée sur un ensemble de données d'entraînement (7) et le réseau antagoniste génératif est entraîné sur la base de l'ensemble de données d'entraînement (7);
- le réseau neuronal artificiel entraîné est appliqué aux données d'entrée (8) pour effectuer automatiquement la tâche de perception visuelle;
une valeur de conformité (9) est déterminée en appliquant un discriminateur du réseau antagoniste génératif entraîné aux données d'entrée (8), dans laquelle la valeur de conformité (9) quantifie une conformité des données d'entrée (8) avec l'ensemble de données d'entraînement (7),
dans laquelle la valeur de conformité est une mesure de la correspondance des données d'entrée (8) avec une distribution de données donnée par l'ensemble de données d'entraînement (7);
* en fonction de la valeur de conformité (9), une sortie dépendant d'un résultat (10) de la tâche de perception visuelle est générée;
les étapes d'application du réseau neuronal artificiel entraîné aux données d'entrée (8), de détermination de la valeur de conformité (9) et de génération de la sortie sont effectuées par l'unité de calcul (5); et
- le véhicule automobile (1) est guidé au moins en partie automatiquement en fonction de la sortie générée par l'unité de calcul (5), dans laquelle le résultat (10) de la tâche de perception visuelle est pris en compte ou ignoré pour le guidage au moins en partie automatique du véhicule automobile (1) en fonction de la valeur de conformité (9).

2. Procédé selon la revendication 1, **caractérisé en ce que**
- la valeur de conformité (9) est comparée à une valeur seuil prédéfinie; et
- la sortie est générée en fonction d'un résultat de la comparaison.

3. Procédé selon la revendication 2, **caractérisé en ce que**
la sortie est générée pour inclure une sortie d'avertissement (11) si la valeur de conformité (9) est inférieure à la valeur seuil.

4. Procédé selon l'une des revendications précédentes, dans lequel
- le réseau antagoniste génératif est entraîné sur la base de l'ensemble de données d'entraînement (7) de manière non supervisée; et/ou
- le réseau neuronal artificiel est entraîné sur la base de l'ensemble de données d'entraînement (7) de manière supervisée.

5. Procédé selon l'une des revendications 2 ou 3, **caractérisé en ce que** le résultat (10) de la tâche de perception visuelle est pris en compte pour le guidage au moins en partie automatique du véhicule automobile (1) uniquement si la valeur de conformité (9) est égale ou supérieure à la valeur seuil.

6. Procédé selon l'une des revendications 2, 3 ou 5, **caractérisé en ce qu'** un signal d'avertissement acoustique et/ou un signal d'avertissement visuel et/ou un signal d'avertissement haptique est généré si le résultat (10) de la tâche de perception visuelle est ignoré pour le guidage au moins en partie automatique du véhicule automobile (1).

7. Système de guidage électronique de véhicule (2) pour un véhicule automobile (1), comprenant
- un élément de stockage (6) stockant un réseau neuronal artificiel, qui a été entraîné sur la base d'un ensemble de données d'entraînement (7) ;
- un système de capteurs (3), qui est configuré pour générer des données d'entrée (8) représentant un environnement du système de guidage électronique de véhicule (2) ; et
- une unité de calcul (5), qui est configurée pour appliquer le réseau neuronal artificiel aux données d'entrée (8) pour effectuer automatiquement une tâche de perception visuelle, **caractérisé en ce que**
- l'élément de stockage (6) stocke au moins une partie d'un réseau antagoniste génératif entraîné, qui a été entraîné sur la base de l'ensemble de données d'entraînement (7);
- l'unité de calcul (5) est configurée pour
- déterminer une valeur de conformité (9) en appliquant un discriminateur du réseau antagoniste génératif aux données d'entrée (8), dans laquelle la valeur de conformité (9) quantifie une conformité des données d'entrée (8) avec l'ensemble de données d'entraînement (7) et la valeur de conformité est une mesure de la correspondance des données d'entrée (8) avec une distribution de données donnée par l'ensemble de données d'entraînement (7); et
- générer une sortie en fonction de la valeur de conformité (9) et en fonction d'un résultat (10) de la tâche de perception visuelle; et
- le système de guidage électronique de véhicule (2) comprend une unité de commande (4), qui est configurée pour guider le véhicule automobile (1) au moins en partie automatiquement en fonction de la sortie, dans laquelle le résultat (10) de la tâche de perception visuelle est pris en compte ou ignoré pour le guidage au moins en partie automatique du véhicule automobile (1) en fonction de la valeur de conformité (9).

8. Système de guidage électronique de véhicule (2) selon la revendication 7, dans lequel le système de capteurs (3) comprend une caméra, un système lidar ou un système radar.

9. Programme informatique comprenant des instructions qui, lors de son exécution par un système de guidage électronique de véhicule (2) selon l'une des revendications 7 ou 8, amènent le système de guidage électronique de véhicule (2) à exécuter un procédé selon l'une des revendications 1 à 6.

10. Support de stockage lisible par ordinateur stockant un programme informatique selon la revendication 9.
